# EUROPEAN PATENT APPLICATION

(11) **EP 1 623 826 A1**
(43) Date of publication of application: **08.02.2006**
(21) Application number: 04724845.5
(22) Date of filing: 31.03.2004
(51) Int. Cl.: B32B 33/00

(54) **DECORATIVE SHEET WITH ANTIQUE TOUCH AND DECORATIVE LAMINATE WITH ANTIQUE TOUCH**

(30) Priority: 04.04.2003 JP 2003101408
(71) Applicant: Riken Technos Corporation, Tokyo 103-8438 (JP)
(72) Inventor: UTO, Hisato Riken Technos Corporation, Tokyo 1033438 (JP); YOSHIOKA, Sayaka Riken Technos Corporation, Tokyo 1033438 (JP); SHIMIZU, Motohiro Riken Technos Corporation, Tokyo 1033438 (JP)
(74) Representative: Henkel, Feiler & Hänzel
(86) International application number: PCT/JP2004/004708
(87) International publication number: WO 2004/089629

(57) **Abstract**

A decorative laminate 40 in which a substrate 5 and a decorative sheet 10 comprising a base sheet 1 and at least a resin coat layer 2 provided on one surface thereof are laminated with each other, wherein the resin coat layer 2 is scraped partly or entirely. The antique style decorative laminate is provided thereby, with the process of work simplified and with the influence on the environment and human body decreased, moreover without installing equipment for exclusive use.

## Description

### Technical Field

The present invention relates to an antique style decorative sheet and decorative laminate using a laminated film or a so-called glazed decorative sheet and decorative laminate in which the feeling of a scrape is expressed.

Particularly, the present invention relates to an antique style or glazed decorative sheet and decorative laminate using a transfer foil film, and to a technique for expressing antique style or glazed design.

### Background Art

As a technique for expressing antique style or glazed design, there has hitherto been a method of expressing it by scraping a coating from above by hand. According to this method, a surface of a base material [for example, a woody material such as a natural wood (a cryptomeria board, Japanese cypress, oak, lauan or teak), a lumber plywood, a laminated wood, a woody medium density fiberboard (MDF), a woody high density fiberboard (HDF) or a particle board] is coated with a coating material, and then, a surface of the coating material is scraped to remove (called sanding treatment), followed by coating again. This is repeated several times, thereby obtaining the antique style design with the surface scraped.

Now, the preparation of the antique style or glazed design by coating has the problem that it takes a lot of labor until one product is obtained, because coating and sanding treatment are required to be repeated many times.

Specifically, it has the problems that (1) the process of work is complicated; (2) a solvent used at the time of coating has an influence on the environment and human body; and (3) coating equipment and scraping equipment for exclusive use are necessary.

An object of the present invention is to provide an antique style or glazed decorative sheet and decorative laminate, with the process of work simplified and with the influence on the environment and human body decreased, moreover without installing equipment for exclusive use.

### Disclosure of the Invention

The present invention relates to an antique style decorative sheet comprising a base sheet and at least a resin coat layer provided on one surface thereof, wherein the above-mentioned resin coat layer is scraped partly or entirely.

Further, the present invention relates to an antique style decorative laminate in which a substrate and a decorative sheet comprising a base sheet and at least a resin coat layer provided on one surface thereof are laminated with each other, wherein the above-mentioned resin coat layer is scraped partly or entirely.

The resin coat layers used herein in the above-mentioned decorative sheet or decorative laminate include at least one selected from the group consisting of an acrylic resin, a urethane-based resin and a polyester-based resin. Further, this resin coat layer may be one laminated using a transfer foil.

### Brief Description of the Drawings

Fig. 1 is a cross sectional view showing a basic constitution of a decorative sheet according to the present invention;
Fig. 2 is a cross sectional view of a sequential lamination type decorative sheet (constitution example 1);
Fig. 3 is a cross sectional view of a sequential lamination type decorative sheet (constitution example 2);
Fig. 4 is a cross sectional view of a sequential lamination type decorative laminate according to the present invention;
Fig. 5 is a cross sectional view of an antique style decorative laminate according to the present invention;
Fig. 6 is a cross sectional view of a transfer foil type decorative laminate;
Fig. 7 is a cross sectional view of a transfer foil (basic constitution);
Fig. 8 is a cross sectional view of a transfer foil (constitution example 1);
Fig. 9 is a cross sectional view of a transfer foil (constitution example 2);
Fig. 10 is a cross sectional view of a transfer foil (constitution example 3);
Fig. 11 is a cross sectional view of a transfer foil type decorative sheet;
Fig. 12 is a cross sectional view of a transfer foil type decorative laminate; and
Fig. 13 is a cross sectional view of a transfer foil type decorative laminate.

### Best Mode for Carrying Out the Invention

The present invention will be described below based on decorative sheet cross sectional schematic diagrams or decorative laminate cross sectional schematic diagrams.

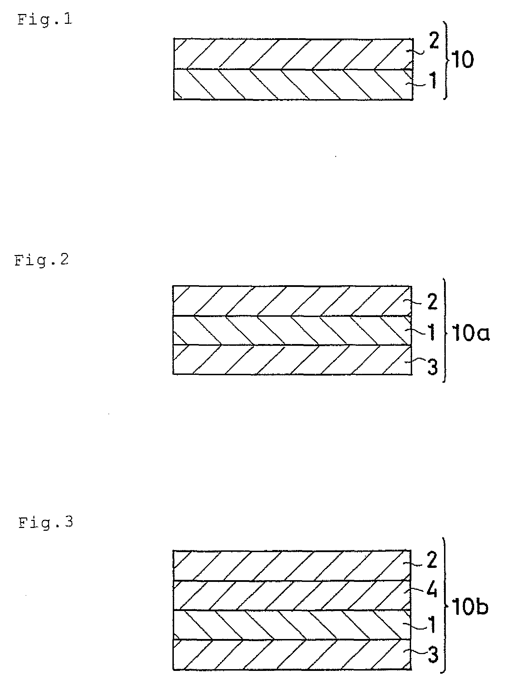

First, an antique style decorative sheet of Fig. 1 will be illustrated. An antique style decorative sheet 10 of the present invention basically comprises a base sheet 1 and a resin coat layer 2 laminated on one surface of the base sheet 1, and a surface layer of the resin coat layer 2 is scraped partly or entirely.

Means for scraping the resin coat layer 2 partly or entirely herein include sanding, sand paper, a steel scrub brush, wiping with a solvent, and the like. Like this, the resin coat layer 2 of the decorative sheet 10 is scraped partly or entirely, thereby resulting in the expression of an antique style or glazed atmosphere.

As the above-mentioned base sheet 1, there can be used a thermoplastic resin. Although there is no particular limitation thereon, there can be preferably used a polyester-based resin such as polyethylene terephthalate or polybutylene terephthalate; a polyolefinic resin such as a polyethylene-based resin or a polypropylene-based resin; a polystyrenic resin; a polycarbonate-based resin; a polyvinyl chloride-based resin; a polyvinylidene chloride-based resin; a polyamide-based resin; or the like. More preferred are a polyvinyl chloride-based resin and a polyester-based resin.

The above-mentioned polyester-based resin is a polymer obtained by condensation polymerization from a dicarboxylic acid and a glycol. The dicarboxylic acids include terephthalic acid, isophthalic acid, phthalic acid, 2,6-naphthalenedicarboxylic acid, adipic acid, sebacic acid and the like, and the glycols include ethylene glycol, trimethylene glycol, tetramethylene glycol, cyclohexanedimethanol and the like.

Specifically, examples thereof include polyethylene terephthalate, polytetramethylene terephthalate, polyethylene-p-oxybenzoate, poly-1,4-cyclohexylenedimethylene terephthalate, polyethylene-2,6-naphthalene dicarboxylate and the like. In particular, polyethylene terephthalate is preferred.

These may be used either as a single body, or as a composite laminate or composite mixture, as needed. Further, the thickness of the base sheet 1 is from 50 µm to 2,000 µm, preferably within the range of 200 µm to 1,000 µm, and more preferably within the range of 300 µm to 800 µm.

This base sheet 1 can be colored by adding a colorant, depending on the necessity for design expression. Further, as the base sheet 1, there can be used, for example, a TSUNAMI series commercially available from Eastman Co.

On the other hand, as the above-mentioned resin coat layer 2, there can be used a hard resin. Although there is no particular limitation thereon, there can be preferably used a silicone-based resin, an acrylic resin, a urethane-based resin, a polyester-based resin or a fluororesin. This resin coat layer 2 comprises a transfer foil, a hard coat film and a coating (including a gravure coat).

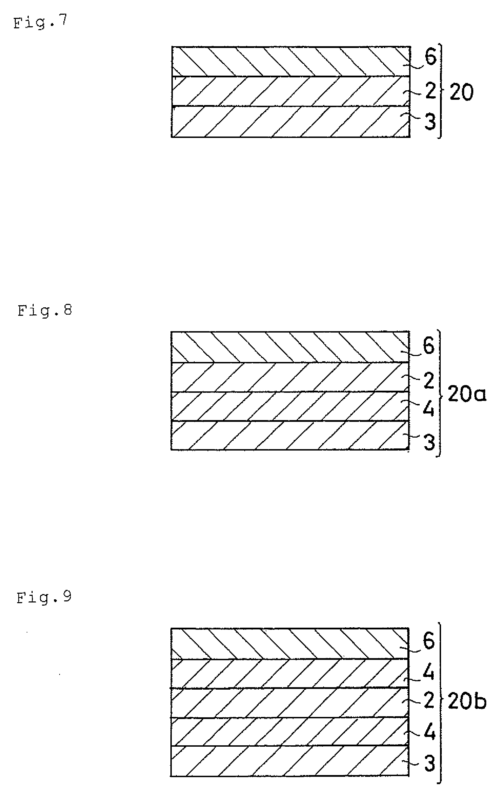

There is no particular limitation on a method for laminating the base sheet 1 with this resin coat layer 2. For example, there is a method of sequentially laminating respective layers such as the resin coat layer 2 on a surface of the base sheet 1 as shown in Figs 2 and 3, or a method of using a transfer foil 20 as shown in Figs. 7 to 10. However, the method of using the transfer foil is preferred.

A decorative sheet 10a of Fig. 2 is one in which an adhesive layer (a) 3 is provided on one surface of the base sheet 1 of the basic constitution decorative sheet 10, and a decorative sheet 10b of Fig. 3 is one in which a resin layer (a) 4 is laminated between the resin coat layer 2 and the base sheet 1, and the adhesive layer (a) 3 is provided on one surface of the base sheet 1.

The resin layer (a) 4 used herein is formed of a polyester-based resin such as polyethylene terephthalate or polybutylene terephthalate; a polyolefinic resin such as a polyethylene-based resin or a polypropylene-based resin; a polystyrenic resin; a polycarbonate-based resin; a polyvinyl chloride-based resin; a polyvinylidene chloride-based resin; a polyamide-based resin; or the like, and printing or coloring may be performed thereon. The resin layer (a) 4 improves design properties of the resulting decorative sheet.

The above-mentioned transfer foil 20 basically comprises a release base layer 6, the resin coat layer 2 and an adhesive layer (b) 3 as shown in Fig. 7.

As the release base layer 6 as used herein, there can be used a polyester film, a vinyl chloride-based resin film, a fluororesin film, release paper or these films onto surfaces of which a release agent is applied. A polyester film is preferred in terms of processability. The resin coat layer 2 is as already described. Further, although there in no particular limitation on the adhesive layer (b) 3, there can be used a vinyl chloride-based adhesive, a vinyl acetate-based adhesive or a vinyl chloride-vinyl acetate mixture-based adhesive.

A transfer foil 20a of Fig. 8 is one in which the resin layer (a) 4 is laminated between the resin coat layer 2 and the adhesive layer (b) 3 in order to improve design properties.

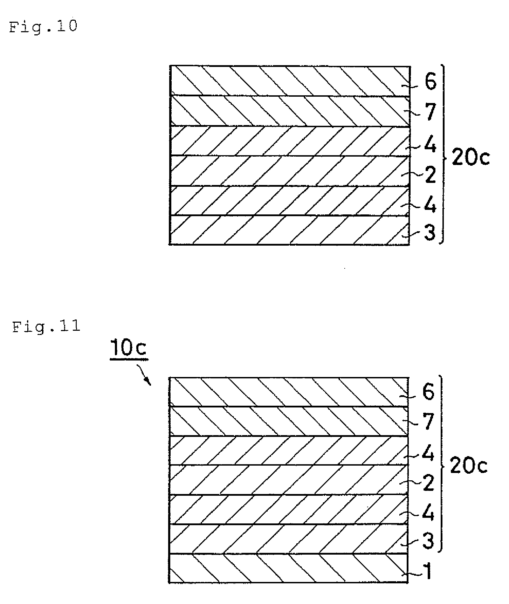

A transfer foil 20b of Fig. 9 is one in which the resin layer (a) 4 is laminated between the resin coat layer 2 and the adhesive layer (b) 3, and the resin layer (b) 4 is also laminated between the release base layer 6 and the resin coat layer 2, in order to more improve design properties.

A transfer foil 20c of Fig. 10 is one in which a release coat layer 7 is laminated between the release base layer 6 and the resin layer (b) 4 in the transfer foil 20b of Fig. 9, in order to improve design properties and processability.

Although there is no particular limitation on the release coat layer 7 as used herein, there can be used, for example, a urethane-based resin, an acrylic resin, a polyester-based resin, a vinyl chloride-based resin and a mixture of each of these resin and a fatty acid-based resin. The release coat layer can contain a pigment in an amount of 1 to 50% by weight, and preferably in an amount of 10 to 30% by weight, as needed.

When these transfer foils 20 or 20c are applied, the resin coat 2 is laminated on the base sheet 1, using each adhesive layer (b) 3.

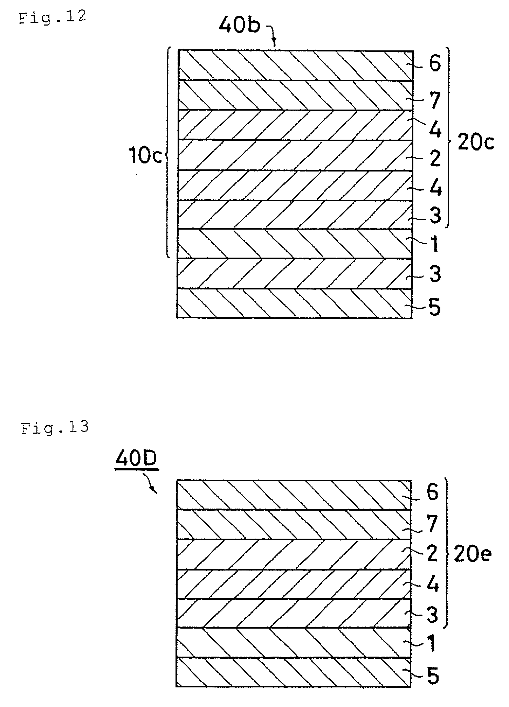

Then, a method for laminating the decorative sheet obtained by the above-mentioned laminating method, for example, a method for laminating a decorative sheet 10c of Fig. 11 on a base material 5 will be illustrated based on a sheet cross section of Fig. 12.

In this case, the base sheet 1 of the decorative sheet 10c is laminated on the base material 5 with the interposition of the adhesive layer (a) 3. Although there is no particular limitation on a method for laminating the decorative sheet 10c and the base material 5 with each other, lamination can be carried out by using a membrane press molding method or a lapping processing method.

A decorative laminate 40b thus obtained is scraped (sanding) partly or entirely up to the resin coat layer (hard coat layer) 2, thereby being able to obtain an antique style or glazed decorative laminate 40B (see Fig. 5).

A surface of a scraped portion can also be covered with a transparent resin as needed.

The base materials include woody materials such as a natural wood (a cryptomeria board, Japanese cypress, oak, lauan or teak), a lumber plywood, a laminated wood, a woody medium density fiberboard (MDF), a woody high density fiberboard (HDF) and a particle board, and as a molding method, the membrane press molding method is preferred.

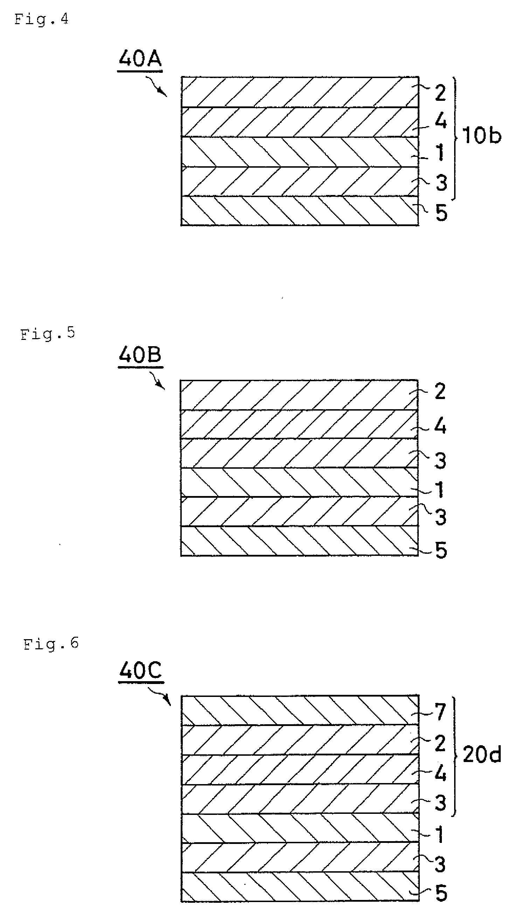

Fig. 4 shows a constitution of an antique style decorative laminate 40A in which an MDF (medium density fiberboard) 5 as the base material is laminated on the decorative sheet 10b of Fig. 3.

Fig. 6 shows an example in which the release coat layer 7, the resin coat layer 2, the resin layer (a) 4 and the adhesive layer (b) 3 are applied as the transfer foil, and Fig. 13 shows a constitution example of a decorative laminate 40C in which the release base layer 6, the release coat layer 7, the resin coat layer 2, the resin layer (a) 4 and the adhesive layer (b) 3 are applied as the transfer foil.

Fig. 13 shows a constitution example of a decorative laminate 40D in which the release base layer 6, the release coat layer 7, the resin coat layer 2, the resin layer (a) 4 and the adhesive layer (b) 3 are applied as the transfer foil.

### Examples

The present invention will be illustrated in greater detail with reference to the following examples.

### Example 1

A release coat layer (a urethane-based resin, thickness: 3 µm) in which a milky-white ink containing a titanium dioxide in an amount of 10% by weight was mixed, a resin coat layer (an acrylic resin, thickness: 3 µm) and an adhesive layer (a vinyl chloride-vinyl acetate-based resin mixture, thickness: 3 µm) were laminated on one surface of a release base layer composed of a biaxially oriented polyethylene terephthalate film having a thickness of 19 µm to prepare a transfer foil.

Three layers of this transfer foil, a transparent polyvinyl chloride-based resin sheet (manufactured by Rikentechnos Corp., polymerization degree: 800, color: clear and colorless, thickness: 0.3 mm) and a base sheet having a woodgrain pattern printed on a colored polyvinyl chloride-based resin sheet (manufactured by Rikentechnos Corp., polymerization degree: 800, color: beige, thickness: 0.3 mm) by gravure printing were laminated to obtain a decorative sheet.

The resulting decorative sheet was overlay laminated on a surface of a medium density fiberboard with the interposition of an adhesive (urethane-based resin, thickness: 3 µm) by a membrane press molding machine (an air press system) (molding conditions: molding temperature; 70°C, molding pressure; 0.4 MPa, pressing time; 90 minutes).

A surface of the resulting laminate was polished with a sanding machine to partly scrape the surface, thereby obtaining a decorative laminate.

### Example 2

A release coat layer (a urethane-based resin, thickness: 3 µm) in which a milky-white ink containing a titanium dioxide in an amount of 10% by weight was mixed, a resin coat layer (an acrylic resin, thickness: 3 µm) and an adhesive layer (a vinyl chloride-vinyl acetate-based resin mixture, thickness: 3 µm) were laminated on one surface of a release base layer composed of a biaxially oriented polyethylene terephthalate film having a thickness of 19 µm to prepare a transfer foil.

Three layers of this transfer foil, a transparent amorphous polyester-based resin sheet (manufactured by Rikentechnos Corp., trade name: Rivestar, color: clear and colorless, thickness: 0.3 mm) and a base sheet having a woodgrain pattern printed on a colored amorphous polyester-based resin sheet (manufactured by Rikentechnos Corp., trade name: Rivestar, color: beige, thickness: 0.3 mm) by gravure printing were laminated to obtain a decorative sheet.

The resulting decorative sheet was overlay laminated on a surface of a medium density fiberboard with the interposition of an adhesive (urethane-based resin, thickness: 3 µm) by a membrane press molding machine (an air press system) (molding conditions: molding temperature; 80°C, molding pressure; 0.5 MPa, pressing time; 120 minutes).

A surface of the resulting laminate was polished with a sanding machine to partly scrape the surface, thereby obtaining a decorative laminate.

### Example 3

A release coat layer (a urethane-based resin, thickness: 3 µm) in which a milky-white ink containing a titanium dioxide in an amount of 10% by weight was mixed, a resin coat layer (an acrylic resin, thickness: 3 µm) and an adhesive layer (a vinyl chloride-vinyl acetate-based resin mixture, thickness: 3 µm) were laminated on one surface of a release base layer composed of a biaxially oriented polyethylene terephthalate film having a thickness of 19 µm to prepare a transfer foil.

Four layers of this transfer foil, a transparent polyvinyl chloride-based resin sheet (manufactured by Rikentechnos Corp., polymerization degree: 800, color: clear and colorless, thickness: 0. 3 mm), a print layer and a base sheet having a woodgrain pattern printed on a colored polyvinyl chloride-based resin sheet (manufactured by Rikentechnos Corp., polymerization degree: 800, color: beige, thickness: 0.3 mm) by gravure printing were laminated to obtain a decorative sheet.

The resulting decorative sheet was overlay laminated on a surface of a medium density fiberboard with the interposition of an adhesive (urethane-based resin, thickness: 3 µm) by a membrane press molding machine (an air press system) (molding conditions: molding temperature; 70°C, molding pressure; 0.4 MPa, pressing time; 90 minutes).

A surface of the resulting laminate was polished with a sanding machine to partly scrape the surface, thereby obtaining a decorative laminate.

### Example 4

A release coat layer (a urethane-based resin, thickness: 3 µm) in which a milky-white ink containing a titanium dioxide in an amount of 10% by weight was mixed, a resin coat layer (an acrylic resin, thickness: 3 µm) and an adhesive layer (a vinyl chloride-vinyl acetate-based resin mixture, thickness: 3 µm) were laminated on one surface of a release base layer composed of a biaxially oriented polyethylene terephthalate film having a thickness of 19 µm to prepare a transfer foil.

Three layers of this transfer foil, a transparent amorphous polyester-based resin sheet (manufactured by Rikentechnos Corp., trade name: Rivestar, color: clear and colorless, thickness: 0.3 mm), a print layer and a base sheet having a woodgrain pattern printed on a colored amorphous polyester-based resin sheet (manufactured by Rikentechnos Corp., trade name: Rivestar, color: beige, thickness: 0.3 mm) by gravure printing were laminated to obtain a decorative sheet.

The resulting decorative sheet was overlay laminated on a surface of a medium density fiberboard with the interposition of an adhesive (urethane-based resin, thickness: 3 µm) by a membrane press molding machine (an air press system) (molding conditions: molding temperature; 80°C, molding pressure; 0.5 MPa, pressing time; 120 minutes).

A surface of the resulting laminate was polished with a sanding machine to partly scrape the surface, thereby obtaining a decorative laminate.

### Industrial Applicability

As described above, according to the present invention, in the decorative sheet comprising the base sheet and at least the resin coat layer provided on one surface thereof, scraping such as sanding was performed on the above-mentioned resin coat layer partly or entirely. Accordingly, it became possible to simplify the process of work compared to conventional manual procedures. In addition, the influence on the environment and human body was significantly decreased. Moreover, it became possible to obtain the antique style or glazed decorative sheet without installing equipment for exclusive use.

Further, according to the present invention, in the decorative laminate in which the substrate and the decorative sheet comprising the base sheet and at least the resin coat layer provided on one surface thereof are laminated with each other, scraping such as sanding was performed on the above-mentioned resin coat layer partly or entirely. Accordingly, it became possible to simplify the process of work compared to conventional manual procedures. In addition, the influence on the environment and human body was significantly decreased. Moreover, it became possible to obtain the antique style or glazed decorative laminate without installing equipment for exclusive use.

There is no particular limitation on the use of the decorative laminate of the present invention, and it can be used, for example, as fittings such as window frames, doors, handrails, sills and head jambs, interior parts such as wall surfaces, ceilings and floors, exterior parts such as outer walls, fences, roofs, gates and bargeboards, furniture such as chests, surface decorative materials for cabinets of light electric and office automation equipment such as TV receivers, interior parts of vehicles such as automobiles, electric cars, aircrafts, ships and vessels, and containers such as caddies.

## Claims

1. An antique style decorative sheet comprising a base sheet and at least a resin coat layer provided on one surface thereof, wherein the resin coat layer is scraped partly or entirely.

2. The antique style decorative sheet according to claim 1, wherein the resin coat layer comprises at least one selected from the group consisting of an acrylic resin, a urethane-based resin and a polyester-based resin.

3. The antique style decorative sheet according to claim 1 or 2, wherein the resin coat layer is laminated using a transfer foil.

4. An antique style decorative laminate in which a substrate and a decorative sheet comprising a base sheet and at least a resin coat layer provided on one surface thereof are laminated with each other, wherein the resin coat layer is scraped partly or entirely.

5. The antique style decorative laminate according to claim 4, wherein the resin coat layer comprises at least one selected from the group consisting of an acrylic resin, a urethane-based resin and a polyester-based resin.

6. The antique style decorative laminate according to claim 4 or 5, wherein the resin coat layer is laminated using a transfer foil.
